# EUROPEAN PATENT APPLICATION

(11) **EP 4 497 601 A1**
(43) Date of publication of application: **29.01.2025**
(21) Application number: 24190803.7
(22) Date of filing: 25.07.2024
(51) Int. Cl.: B41J 2/17, B41J 2/165

(54) **LIQUID-ABSORBING BODY AND LIQUID-ABSORBING DEVICE**

(30) Priority: 27.07.2023 JP 2023122380
(71) Applicant: Seiko Epson Corporation, Tokyo 160-8801 (JP)
(72) Inventor: NAKADA, Shogo, 392-8502 Suwa-shi (JP); KONO, Taiki, 392-8502 Suwa-shi (JP); TAKAHASHI, Katsuhiro, 392-8502 Suwa-shi (JP); TOYA, Akihiro, 392-8502 Suwa-shi (JP)
(74) Representative: Lewis Silkin LLP

(57) **Abstract**

A liquid-absorbing body includes: an absorbing layer having a water-absorbing resin and having liquid-absorbing ability; and a base material layer stacked on at least one surface side of the absorbing layer, the base material layer having liquid permeability, in which the base material layer has a first layer including cellulose and a second layer positioned on a side of the first layer opposite to the absorbing layer, the second layer having a basis weight different from a basis weight of the first layer, and A2 < A1, wherein A1 (g/cm²) is the basis weight of the first layer and A2 (g/cm²) is the basis weight of the second layer.

## Description

The present application is based on, and claims priority from JP Application Serial Number 2023-122380, filed July 27, 2023, the disclosure of which is hereby incorporated by reference herein in its entirety.

### BACKGROUND

### 1. Technical Field

The present disclosure relates to a liquid-absorbing body and a liquid-absorbing device.

### 2. Related Art

In an ink jet printer, waste ink is generated during head cleaning operation performed to prevent deterioration of printing quality due to clogging of ink and during ink filling operation after replacement of an ink cartridge, for example. There is also a possibility that ink leaks from an unintended site of the ink jet printer. An ink absorbing body that absorbs such ink has been known. For example, JP-A-2017-65112 discloses an ink absorbing body which is accommodated in a container and is composed of, for example, felt including fibers.

However, the ink absorbing body described in JP-A-2017-65112 has poor ink absorption characteristics, especially, poor ink diffusivity. Therefore, depending on ink dropping conditions, the diffusion rate of ink dropped into the ink absorbing body is slow, and the ink sometimes does not entirely spread. As a result, the absorption capacity of the ink absorbing body decreases.

### SUMMARY

The present disclosure is a liquid-absorbing body including:
an absorbing layer having a water-absorbing resin and having liquid-absorbing ability; and
a base material layer stacked on at least one surface side of the absorbing layer, the base material layer having liquid permeability, wherein
the base material layer has a first layer including cellulose and has a second layer positioned on a side of the first layer opposite to the absorbing layer, the second layer having a basis weight different from a basis weight of the first layer, and
A2 < A1, wherein A1 (g/cm²) is the basis weight of the first layer and A2 (g/cm²) is the basis weight of the second layer.

The present disclosure is a liquid-absorbing device including:
the liquid-absorbing body according to the present disclosure; and
a container accommodating the liquid-absorbing body and having a liquid supply section through which liquid is supplied.

### BRIEF DESCRIPTION OF THE DRAWINGS

FIG. 1 is a cross-sectional side view of a liquid-absorbing body and a liquid-absorbing device according to an embodiment of the present disclosure.
FIG. 2 is an enlarged cross-sectional view of the liquid-absorbing body illustrated in FIG. 1.
FIG. 3 is a plan view of the liquid-absorbing body illustrated in FIG. 1.
FIG. 4 is a cross-sectional side view for explaining a method for producing the liquid-absorbing body illustrated in FIG. 1.
FIG. 5 is a cross-sectional side view for explaining the method for producing the liquid-absorbing body illustrated in FIG. 1.
FIG. 6 is a cross-sectional side view for explaining the method for producing the liquid-absorbing body illustrated in FIG. 1.
FIG. 7 is a cross-sectional side view for explaining the method for producing the liquid-absorbing body illustrated in FIG. 1.

### DESCRIPTION OF EMBODIMENTS

Hereinafter, a liquid-absorbing body and a liquid-absorbing device according to the present disclosure will be described in detail based on a preferred embodiment illustrated in the accompanying drawings.

### First embodiment

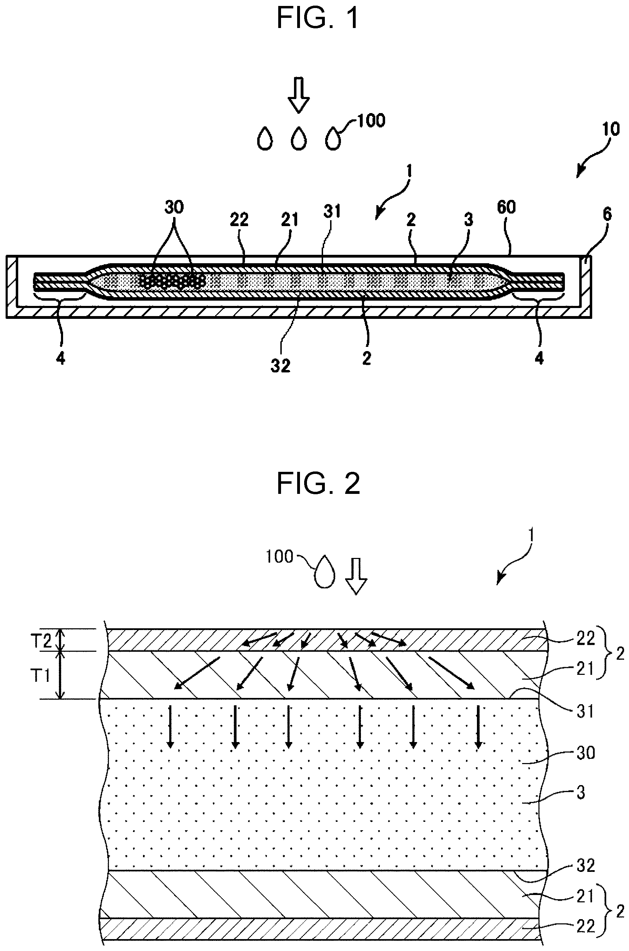

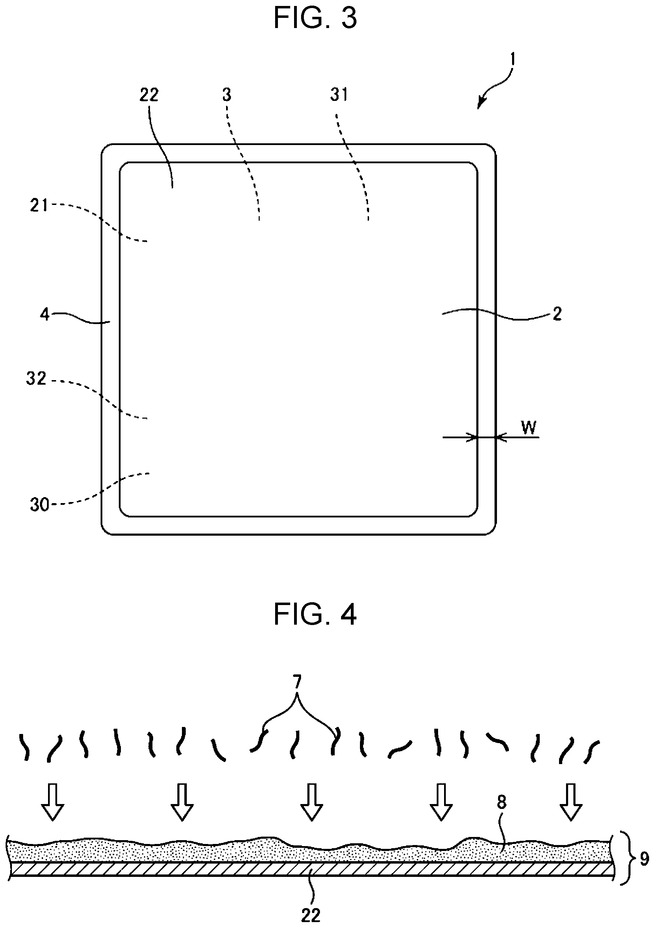

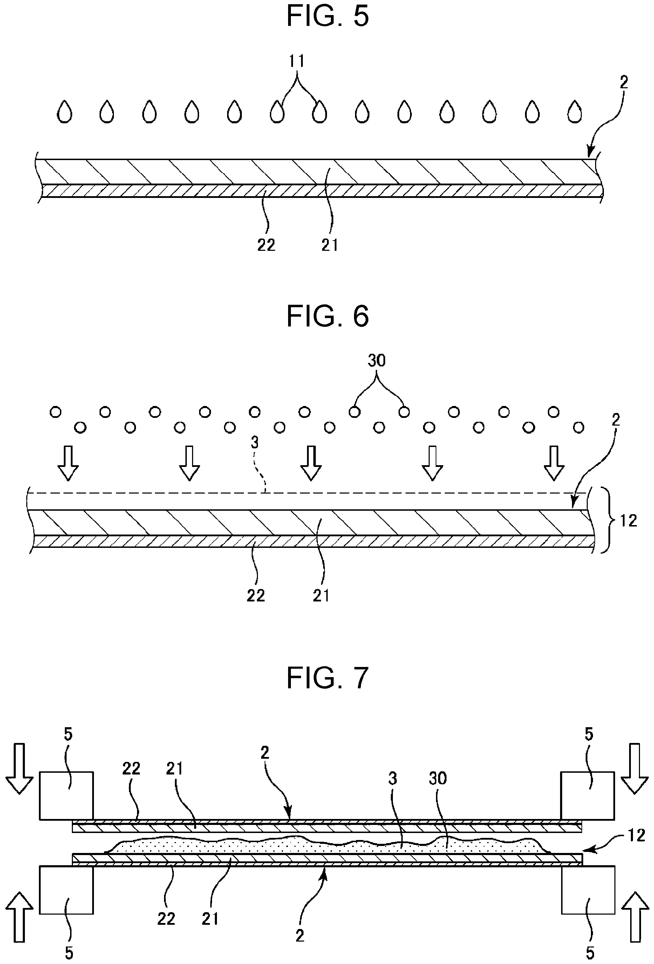

FIG. 1 is a cross-sectional side view of a liquid absorbing body and a liquid absorbing device according to an embodiment of the present disclosure. FIG. 2 is an enlarged cross-sectional view of the liquid-absorbing body illustrated in FIG. 1. FIG. 3 is a plan view of the liquid-absorbing body illustrated in FIG. 1. FIG. 4 is a cross-sectional side view for explaining a method for producing the liquid-absorbing body illustrated in FIG. 1. FIG. 5 is a cross-sectional side view for explaining the method for producing the liquid-absorbing body illustrated in FIG. 1. FIG. 6 is a cross-sectional side view for explaining the method for producing the liquid-absorbing body illustrated in FIG. 1. FIG. 7 is a cross-sectional side view for explaining the method for producing the liquid-absorbing body illustrated in FIG. 1.

Note that in the following description, for convenience of explanation, the upper side and the lower side in FIGs. 1, 2, 4, 5, 6, and 7 are referred to as "upper" or "above" and "lower" or "below," respectively.

As illustrated in FIG. 1, a liquid-absorbing device 10 includes a liquid-absorbing body 1 and a container 6 accommodating the liquid-absorbing body 1. The container 6 has an opening 60 upwardly opening. In the present embodiment, the container 6 is a tray. The container 6 is formed from, for example, a hard material such as resin, glass, ceramic, or metal material, and has liquid impermeability. The opening 60 functions as a liquid supply section through which liquid such as an ink 100 is supplied to the liquid-absorbing body 1. The liquid supplied through the opening 60 is absorbed and held by the liquid-absorbing body 1. The liquid-absorbing device 10 having such a configuration is installed in a printing apparatus, for example, and is used to collect waste ink, that is, the ink 100 to be discarded. The liquid-absorbing device 10 can also be used to collect waste liquid other than waste ink.

Examples of the liquid absorbed by the liquid-absorbing body 1 include water, an ink, and body fluid. In addition, examples of the ink include, in addition to an aqueous ink in which a coloring material is dissolved in an aqueous solvent, a solvent-based ink in which a binder is dissolved in a solvent, a UV curable ink in which a binder is dissolved in a liquid monomer cured by UV irradiation, and a latex ink in which a binder is dispersed in a dispersion medium. Hereinafter, the ink 100 will be described as a representative example of the liquid absorbed by the liquid-absorbing body 1.

As illustrated in FIG. 1, the liquid-absorbing body 1 has an absorbing layer 3 having liquid-absorbing ability and a base material layer 2 stacked on both surface sides of the absorbing layer 3 and having liquid permeability. The ink 100 supplied to the base material layer 2 on the upper side through the opening 60 penetrates into the base material layer 2, diffuses in the surface direction and the thickness direction of the base material layer 2, further moves to the absorbing layer 3 existing adjacent to the inner side of the base material layer 2, and is absorbed and held by the absorbing layer 3. The liquid-absorbing body 1 has a sheet shape as a whole. However, the shape of the liquid-absorbing body 1 is not limited to this configuration, and the liquid-absorbing body 1 may have another shape such as a block shape.

Although the sheet-shaped liquid-absorbing body 1 has a flat plate shape in the configuration illustrated in the drawings, the entire or part of the liquid-absorbing body 1 may curve or bend unlike in the case of the drawings.

Hereinafter, configurations of the absorbing layer 3 and the base material layer 2 will be described.

### Absorbing layer 3

The absorbing layer 3 is mainly composed of a water-absorbing resin 30. The water-absorbing resin 30 has water-absorbing ability and is a resin that swells as the water-absorbing resin 30 absorbs water. Examples of the water-absorbing resin 30 include carboxymethylcellulose, polyacrylic acid, polyacrylamide, a starch-acrylic acid graft copolymer, a hydrolysate of a starch-acrylonitrile graft copolymer, a vinyl acetate-acrylic acid ester copolymer, a copolymer of, for example, isobutylene and maleic acid, a hydrolysate of an acrylonitrile copolymer or an acrylamide copolymer, polyethylene oxide, a polysulfonic acid-based compound, polyglutamic acid, and a salt (neutralized product) and a cross-linked product thereof, but are not limited thereto. Here, water-absorbing ability refers to a function of having hydrophilicity and holding moisture. Many of these kinds of the water-absorbing resin 30 gelate upon absorbing water.

Among these, the water-absorbing resin 30 is preferably a resin having a functional group in a side chain. Examples of the functional group include an acid group, a hydroxy group, an epoxy group, and an amino group.

In particular, the water-absorbing resin 30 is preferably a resin having an acid group in a side chain and more preferably a resin having a carboxy group in a side chain.

Examples of a carboxy group-containing unit constituting the side chain include those derived from a monomer such as acrylic acid, methacrylic acid, itaconic acid, maleic acid, crotonic acid, fumaric acid, sorbic acid, cinnamic acid, an anhydride thereof, or a salt thereof.

When the water-absorbing resin 30 having an acid group in a side chain is included, the proportion of acid groups neutralized to form a salt among the acid groups included in the water-absorbing resin 30 is preferably 30 mol% or more and 100 mol% or less, more preferably 50 mol% or more and 95 mol% or less, and still more preferably 60 mol% or more and 90 mol% or less. Absorption of the ink 100 by the water-absorbing resin 30 can be made more excellent thereby.

Kinds of the salt formed through neutralization are not particularly limited, and examples thereof include alkaline metal salts such as a sodium salt, a potassium salt, and a lithium salt; and salts of a nitrogen-containing basic substance such as ammonia. Among these, a sodium salt is preferable. Absorption of the ink 100 by the water-absorbing resin 30 can be made more excellent thereby.

The water-absorbing resin 30 having an acid group in a side chain is preferable because acid groups electrostatically repel each other during absorbing ink, and the absorption rate increases. In addition, when the acid group is neutralized, the ink 100 is likely to be easily absorbed into the water-absorbing resin 30 due to osmotic pressure.

The water-absorbing resin 30 may have a constituent unit containing no acid group in a side chain, and examples of such a constituent unit include a hydrophilic constituent unit, a hydrophobic constituent unit, and a constituent unit serving as a polymerization cross-linking agent.

Examples of the hydrophilic constituent unit include constituent units derived from a nonionic compound such as acrylamide, methacrylamide, N-ethyl (meth)acrylamide, N-n-propyl (meth)acrylamide, N-isopropyl (meth)acrylamide, N,N-dimethyl (meth)acrylate, 2-hydroxyethyl (meth)acrylate, 2-hydroxypropyl (meth)acrylate, methoxypolyethylene glycol (meth)acrylate, polyethylene glycol mono(meth)acrylate, N-vinylpyrolidone, N-acryloylpiperidine, and N-acryloylpyrrolidine.

Examples of the hydrophobic constituent unit include constituent units derived from a compound such as (meth)acrylonitrile, styrene, vinyl chloride, butadiene, isobutene, ethylene, propylene, stearyl (meth)acrylate, and lauryl (meth)acrylate.

Examples of the constituent unit serving as a polymerization cross-linking agent include constituent units derived from diethylene glycol diacrylate, N,N-methylenebis acrylamide, polyethylene glycol diacrylate, polypropylene glycol diacrylate, trimethylolpropane diallyl ether, trimethylolpropane triacrylate, allyl glycidyl ether, pentaerythritol triallyl ether, pentaerythritol diacrylate monostearate, bisphenol diacrylate, isocyanuric acid diacrylate, tetraallyloxyethane, and a diallyloxyacetic acid salt.

The water-absorbing resin 30 preferably contains a polyacrylic acid salt copolymer or a polyacrylic acid cross-linked polymer. For example, the following advantages are provided thereby: liquid-absorbing ability can be improved, and production cost can be reduced.

In the polyacrylic acid cross-linked polymer, the proportion of carboxy group-containing constituent units based on all constituent units constituting the molecular chain is preferably 50 mol% or more, more preferably 80 mol% or more, and still more preferably 90 mol% or more.

When the proportion of carboxy group-containing constituent units is too small, there may be a disadvantage in providing sufficiently excellent ability of absorbing the ink 100.

It is preferable that some carboxy groups in the polyacrylic acid cross-linked polymer be neutralized (partial neutralization) to form a salt.

The proportion of neutralized carboxy groups based on all carboxy groups in the polyacrylic acid cross-linked polymer is preferably 30 mol% or more and 99 mol% or less, more preferably 50 mol% or more and 99 mol% or less, and still more preferably 70 mol% or more and 99 mol% or less.

In addition, the water-absorbing resin 30 may have a structure cross-linked with a cross-linking agent other than the above-described polymerizable cross-linking agent.

When the water-absorbing resin 30 is a resin having an acid group, a compound having multiple functional groups reactive with an acid group can be preferably used as the cross-linking agent, for example.

When the water-absorbing resin 30 is a resin having a functional group reactive with an acid group, a compound having multiple functional groups reactive with an acid group within a molecule can be preferably used as the cross-linking agent.

Examples of the compound (cross-linking agent) having multiple functional groups reactive with an acid group within a molecule include glycidyl ether compounds such as ethylene glycol diglycidyl ether, trimethylolpropane triglycidyl ether, (poly)glycerine polyglycidyl ether, diglycerine polyglycidyl ether, and propylene glycol diglycidyl ether; polyhydric alcohols such as (poly)glycerin, (poly)ethylene glycol, propylene glycol, 1,3-propanediol, polyoxyethylene glycol, triethylene glycol, tetraethylene glycol, diethanolamine, and triethanolamine; and polyvalent amines such as ethylenediamine, diethylenediamine, polyethyleneimine, and hexamethylenediamine. In addition, polyvalent ions such as ions of zinc, calcium, magnesium, and aluminum can also be preferably used because the polyvalent ions react with the acid group of the water-absorbing resin 30 to function as a cross-linking agent.

The water-absorbing resin 30 may have any shape such as a scale-like shape, a needle-like shape, a fibrous shape, or a particulate shape, for example, but it is preferable that most of the water-absorbing resin 30 have a particulate shape. When the water-absorbing resin 30 has a particulate shape, permeability for the ink 100 can be easily ensured. The average particle diameter of the particles is preferably 10 µm or more and 1000 µm or less, more preferably 50 µm or more and 800 µm or less, and still more preferably 100 µm or more and 600 µm or less.

The absorbing layer 3 may also include a component (additional component) other than the water-absorbing resin 30. Examples of such a component include a surfactant, a lubricant, an antifoaming agent, a filler, an ion exchange resin, activated carbon, a zeolite, an anti-blocking agent, an ultraviolet absorbent, a coloring agent such as a pigment and a dye, a flame retardant, and a fluidity improver.

The above-described water-absorbing resin 30 may or may not be carried by the base material layer 2, especially, a first layer 21 described later. When the water-absorbing resin 30 is carried by the base material layer 2, the position of the water-absorbing resin 30 can be regulated to some extent, and generation of a portion where the water-absorbing resin 30 is unevenly distributed in the absorbing layer 3 can be prevented. Therefore, the liquid-absorbing body 1 can exhibit excellent absorption characteristics without unevenness.

The method for causing the base material layer 2 to carry the water-absorbing resin 30 is not particularly limited, and examples thereof include a method in which the water-absorbing resin 30 is bonded to the base material layer 2 using an adhesive, and a method in which tackiness is imparted to the water-absorbing resin 30 by applying moisture, and the water-absorbing resin 30 is stuck to the base material layer 2 through tackiness. When an adhesive is used, the adhesive used is not particularly limited, but a water-soluble adhesive is preferable. Consequently, in the case in which the ink 100 is an aqueous ink, since the water-soluble adhesive is dissolved when the ink 100 comes into contact with the adhesive, penetration of the ink 100 into the water-absorbing resin 30 can be prevented from being inhibited.

When the volume of the water-absorbing resin 30 during drying, that is, before the ink 100 is absorbed is denoted as V1, and the volume of the water-absorbing resin 30 after the ink 100 is absorbed to the maximum is denoted as V2, V2/V1 is preferably 2 or more and 1000 or less and more preferably 5 or more and 250 or less. A sufficient amount of the ink 100 can be absorbed thereby.

### Base material layer 2

As illustrated in FIG. 2, the base material layer 2 is stacked on each of the upper surface 31 side, which is one surface side of the absorbing layer 3, and the lower surface 32 side, which is the other surface side of the absorbing layer 3. That is, the liquid-absorbing body 1 is configured such that the absorbing layer 3 is inserted between two layers of the base material layer 2. Hereinafter, the base material layer 2 on the upper surface 31 side is described as a representative since the two layers of the base material layer 2 both have the same configuration in the present embodiment.

The base material layer 2 has a first layer 21 and a second layer 22. Although the shapes in a plan view, that is, the shapes illustrated in FIG. 3 of the first layer 21 and the second layer 22 are approximately square in the present embodiment, the shapes are not limited to this configuration and may be any shape such as a rectangle like an oblong, a triangle, a circle, an ellipse, a semicircular shape, a fan shape, an annular shape, or a polygon having five or more sides.

The first layer 21 and the second layer 22 may be coupled to each other, may be in contact with each other, or may be separated from each other at a predetermined interval, at the boundary therebetween. In the present embodiment, the first layer 21 and the second layer 22 are coupled with weak bonding force.

As illustrated in FIG. 2, the first layer 21 is positioned on the absorbing layer 3 side and faces the absorbing layer 3. The first layer 21 and the absorbing layer 3 may be coupled to each other, may be in contact with each other, or may be separated from each other at a predetermined interval, at the boundary therebetween. In the present embodiment, the first layer 21 is in contact with the absorbing layer 3.

The first layer 21 is a paper base material mainly formed from cellulose fibers. Since cellulose is a material having preferable hydrophilicity, when the ink 100 is applied to the first layer 21, the ink 100 can be efficiently taken in, making it possible to rapidly get rid of a state with particularly high fluidity, for example, a state with viscosity of 10 mPa·s or less. Further, the ink 100 once taken in can be efficiently fed into the water-absorbing resin 30. As a result, the characteristics of absorbing the ink 100 of the liquid-absorbing body 1 as a whole can be made particularly excellent. In addition, since cellulose fibers are a regenerable natural material and are inexpensive and easily available among various kinds of fibers, cellulose fibers are advantageous also from the viewpoints of reduction in production costs of the liquid-absorbing body 1, stable production, reduction in environmental loads, and the like.

In the present specification, the cellulose fibers may be a fibrous material mainly containing cellulose as a compound and may include hemicellulose and lignin in addition to cellulose.

The average length of the cellulose fibers constituting the first layer 21 is not particularly limited but is preferably 0.1 mm or more and 7 mm or less, more preferably 0.13 mm or more and 5 mm or less, and still more preferably 0.15 mm or more and 3 mm or less.

The average width (diameter) of the cellulose fibers constituting the first layer 21 is not particularly limited but is preferably 0.05 mm or more and 2 mm or less and more preferably 0.1 mm or more and 1 mm or less.

The average aspect ratio, that is, the ratio of the average length to the average width of the cellulose fibers constituting the first layer 21 is not particularly limited but is preferably 10 or more and 1000 or less and more preferably 15 or more and 500 or less.

Adequate diffusivity of the ink 100 in the first layer 21 is obtained in the above numerical value ranges. In addition, the first layer 21 is excellent in the ability to carry the water-absorbing resin 30, and the ink 100 is efficiently transferred to the water-absorbing resin 30. Therefore, the characteristics of absorbing the ink 100 of the liquid-absorbing body 1 as a whole can be made more excellent.

As illustrated in FIG. 2, the second layer 22 is positioned on the side opposite to the absorbing layer 3 of the first layer 21. That is, the second layer 22 is positioned on a surface of the liquid-absorbing body 1. The second layer 22 is a part to which the ink 100 is supplied and has a function to allow the ink 100 having been taken in to promptly penetrate and diffuse, especially, a function to diffuse the ink 100 in the surface direction.

The second layer 22 includes fibers. Examples of the fibers of the second layer 22 include synthetic resin fibers such as polyester fibers and polyamide fibers, natural resin fibers such as cellulose fibers, keratin fibers, and fibroin fibers, and chemically modified products thereof, and these fibers may be used singly or as an appropriate mixture. In the present embodiment, the second layer 22 is unwoven fabric of the fibers.

The average length of the fibers constituting the second layer 22 is not particularly limited but is preferably 0.05 mm or more and 6 mm or less, more preferably 0.06 mm or more and 4 mm or less, and still more preferably 1.00 mm or more and 2 mm or less.

The average width (diameter) of the fibers constituting the second layer 22 is not particularly limited but is preferably 0.04 mm or more and 1.8 mm or less and more preferably 0.08 mm or more and 0.9 mm or less.

The average aspect ratio (the ratio of the average length to the average width) of the fibers constituting the second layer 22 is not particularly limited but is preferably 10 or more and 1000 or less and more preferably 15 or more and 500 or less.

Good diffusivity of the ink 100 in the second layer 22 is obtained in the above numerical value ranges. In addition, the ink 100 can be efficiently transferred to the water-absorbing resin 30 in the second layer 22. Therefore, the characteristics of absorbing the ink 100 of the liquid-absorbing body 1 as a whole can be made more excellent.

In addition, the second layer 22 is unwoven fabric. Consequently, the diffusivity of the ink 100 in the surface direction of the second layer 22 can be enhanced, and there is not diffusivity unevenness depending on diffusion directions.

However, the second layer 22 is not limited to unwoven fabric and may be formed from woven fabric or a paper base material similar to the first layer 21, for example. In addition, woven fabric, unwoven fabric, and a paper base material may be appropriately combined and used as the second layer 22.

The second layer 22 preferably has hydrophilicity. Diffusivity of the ink 100 is further improved thereby. The case in which the second layer 22 has hydrophilicity includes a case in which fibers constituting the second layer 22 themselves have hydrophilicity, a case in which the fibers constituting the second layer 22 are subjected to a hydrophilization treatment, and a case in which a surface of the second layer 22 is subjected to a hydrophilization treatment.

The hydrophilization treatment includes a chemical treatment such as application of a surfactant and a physical treatment such as a plasma treatment.

The first layer 21 and the second layer 22 may be formed from the same material or may be formed from different materials. In particular, the fibers included in the first layer 21 and the fibers included in the second layer 22 may all be the same material, may be partially the same material, or may each be a different material.

In addition, the first layer 21 and the second layer 22 may include a binder for binding fibers together in addition to the fibers. Strength of the first layer 21 and the second layer 22 can be sufficiently enhanced thereby, and a portion not intended to break can be prevented from breaking.

The binder is not particularly limited, and thermoplastic resin, thermosetting resin, starch, dextrin, glycogen, amylose, hyaluronic acid, arrowroot, arum root, starch, etherified starch, esterified starch, natural gum paste (etherified tamarind gum, etherified locust bean gum, etherified guar gum, acacia arabic gum), fiber-induced glue (etherified carboxymethylcellulose, hydroxyethylcellulose), sea algae (sodium alginate, agar), animal protein (collagen, gelatin, hydrolyzed collagen, sericin), and the like can be used, for example. However, thermoplastic resin is preferably used.

Examples of the thermoplastic resin include polyolefins such as AS resin, ABS resin, polyethylene, polypropylene, and an ethylene-vinyl acetate copolymer (EVA); modified polyolefins; acrylic resins such as a polymethyl methacrylate; polyvinyl chloride; polystyrene; polyesters such as polyethylene terephthalate and polybutylene terephthalate; polyamides (nylon) such as nylon 6, nylon 46, nylon 66, nylon 610, nylon 612, nylon 11, nylon 12, nylon 6-12, and nylon 6-66; polyphenylene ethers; polyacetal; polyethers; polyphenylene oxide; polyether ether ketones; polycarbonates; polyphenylene sulfides; thermoplastic polyimides; polyetherimide; liquid crystal polymers such as an aromatic polyester; and various thermoplastic elastomers such as styrene-based, polyolefin-based, polyvinyl chloride-based, polyurethane-based, polyester-based, polyamide-based, polybutadiene-based, transpolyisoprene-based, fluororubber-based, and chlorinated polyethylene-based elastomers, and one kind selected therefrom or a combination of two or more kinds selected therefrom can be used. Preferably, a polyester or a thermoplastic resin containing a polyester is used as the thermoplastic resin.

Note that a coloring agent for coloring the fibers, an aggregation inhibitor for suppressing aggregation of the fibers and aggregation of the binder, a flame retardant for making the fibers and the like to hardly burn, a paper reinforcing agent for enhancing paper strength, and the like may be included in addition to the binder, for example.

In the base material layer 2 described above, when the basis weight of the first layer 21, that is, the basis weight of the material constituting the first layer 21 is denoted as A1 (g/cm²), and the basis weight of the second layer 22, that is, the basis weight of the material constituting the second layer 22 is denoted as A2 (g/cm²), A2 < A1 is satisfied.

According to the configuration described above, as illustrated in FIG. 2, the ink 100 applied to the second layer 22 is promptly dispersed far enough on the second layer 22 in the surface direction and dispersed also in the layer thickness direction to be transferred to the first layer 21. In addition, the ink 100 transferred to the first layer 21 once is transferred to the absorbing layer 3 in contact with the first layer 21 without returning to the second layer 22 side, and is absorbed and held by the absorbing layer 3. Accordingly, the ink 100 can be promptly absorbed and held over a wider area of the liquid-absorbing body 1, and the characteristics of absorbing the ink 100 of the liquid-absorbing body 1 as a whole can be made further excellent.

In particular, since the ink 100 is promptly dispersed far enough on the second layer 22 in the surface direction, the ink 100 is absorbed and held throughout the absorbing layer 3. Therefore, transfer and dispersion of the ink 100 are not slowed inside the liquid-absorbing body 1, and the liquid-absorbing body 1 can promptly absorb and hold a larger amount of the ink 100.

A1 is not particularly limited but is preferably 0.02 g/cm² or more and 2.0 g/cm² or less and more preferably 0.05 g/cm² or more and 1.5 g/cm² or less, for example.

A2 is not particularly limited but is preferably 0.01 g/cm² or more and 1.8 g/cm² or less and more preferably 0.04 g/cm² or more and 1.2 g/cm² or less, for example.

The above-described effect provided by satisfying A2 < A1 can be more significantly exhibited by setting A1 and A2 to meet the above-described numerical ranges.

The ratio A1/A2 between A1 and A2 is preferably 1.1 or more and 5 or less and more preferably 1.2 or more and 4 or less. The above-described effect provided by satisfying A2 < A1 can be more surely and significantly exhibited by setting A1 and A2 thereby.

When the density of the first layer 21, that is, the density of the material constituting the first layer 21 is denoted as B1 (g/cm³), and the density of the second layer 22, that is, the density of the material constituting the second layer 22 is denoted as B2 (g/cm³), B2 < B1 is preferably satisfied.

Consequently, the ink 100 applied to the second layer 22 is promptly dispersed far enough on the second layer 22 in the surface direction and dispersed also in the layer thickness direction to be transferred to the first layer 21. In addition, the ink 100 transferred to the first layer 21 once is transferred to the absorbing layer 3 in contact with the first layer 21 without returning to the second layer 22 side, and is absorbed and held by the absorbing layer 3. Accordingly, the ink 100 can be promptly absorbed and held over a wider area of the liquid-absorbing body 1, and the characteristics of absorbing the ink 100 of the liquid-absorbing body 1 as a whole can be made further excellent.

B1 is not particularly limited but is preferably 0.02 g/cm³ or more and 0.8 g/cm³ or less and more preferably 0.06 g/cm³ or more and 0.5 g/cm³ or less, for example.

B2 is not particularly limited but is preferably 0.01 g/cm³ or more and 0.5 g/cm³ or less and more preferably 0.05 g/cm³ or more and 0.3 g/cm³ or less, for example.

The above-described effect provided by satisfying B2 < B1 can be more significantly exhibited by setting B1 and B2 to meet the above-described numerical ranges.

The ratio B1/B2 between B1 and B2 is preferably 1.3 or more and 4 or less and more preferably 1.5 or more and 2 or less. The above-described effect provided by satisfying B2 < B1 can be more surely and significantly exhibited thereby.

Incidentally, the relation between B1 and B2 is not limited to the above-described configuration and may satisfy B1 = B2 or may satisfy B1 < B2.

When the thickness (average thickness) of the first layer 21 is denoted as T1 (mm), and the thickness (average thickness) of the second layer 22 is denoted as T2 (mm), T2 < T1 is preferably satisfied. Consequently, the ink 100 applied to the second layer 22 is effectively dispersed on the second layer 22 in the surface direction, and the ink 100 transferred to the first layer 21 transferred to the first layer 21 can be efficiently prevented from returning to the second layer 22 side. Accordingly, the characteristics of absorbing the ink 100 of the liquid-absorbing body 1 as a whole can be made further excellent.

T1 is not particularly limited but is preferably 0.2 mm or more and 10 mm or less and more preferably 0.6 mm or more and 5 mm or less, for example.

T2 is not particularly limited but is preferably 0.1 mm or more and 8 mm or less and more preferably 0.5 mm or more and 4 mm or less, for example.

The above-described effect provided by satisfying T2 < T1 can be more significantly exhibited by setting T1 and T2 to meet the above-described numerical ranges.

The ratio T1/T2 between T1 and T2 is not particularly limited but is preferably 1.2 or more and 5 or less and more preferably 1.5 or more and 3 or less. The effects that the ink 100 can be promptly dispersed far enough on the second layer 22 in the surface direction and that the ink 100 can be promptly transferred to the first layer 21 can be more significantly exhibited thereby.

Incidentally, the relation between T1 and T2 is not limited to the above-described configuration and may satisfy T1 = T2 or may satisfy T1 < T2.

Furthermore, when the diffusion rate of the ink 100 in the surface direction of the first layer 21 is denoted as C1 (mm/s), and the diffusion rate of the ink 100 in the surface direction of the second layer 22 is denoted as C2 (mm/s), C1 < C2 is preferably satisfied. Consequently, the ink 100 applied to the second layer 22 can be more promptly dispersed further on the second layer 22 in the surface direction. Accordingly, the characteristics of absorbing the ink 100 of the liquid-absorbing body 1 as a whole can be made further excellent.

C1 is not particularly limited but is preferably 0.5 mm/s or more and 8 mm/s or less and more preferably 1 mm/s or more and 6 mm/s or less, for example.

C2 is not particularly limited but is preferably 1 mm/s or more and 10 mm/s or less and more preferably 2 mm/s or more and 8 mm/s or less, for example.

The above-described effect provided by satisfying C1 < C2 can be more significantly exhibited by setting C1 and C2 to meet the above-described numerical ranges.

The ratio C2/C1 between C1 and C2 is not particularly limited but is preferably 1.2 or more and 4 or less and more preferably 1.5 or more and 2 or less. The effects that the ink 100 can be promptly dispersed far enough on the second layer 22 in the surface direction and that the ink 100 can be promptly transferred to the first layer 21 can be more significantly exhibited thereby.

Incidentally, A1, A2, B1, B2, T1, T2, C1, and C2 described above are values obtained without a sealing portion 4 described later.

As described above, the liquid-absorbing body 1 includes: the absorbing layer 3 that has the water-absorbing resin 30 and has liquid-absorbing ability; and the base material layer 2 that is stacked on at least one side of the absorbing layer 3, is stacked on each side of the absorbing layer 3 in the present embodiment, and has liquid permeability. The base material layer 2 has: the first layer 21 including cellulose; and the second layer 22 that is positioned on the side of the first layer 21 opposite to the absorbing layer 3 and that has a basis weight different from that of the first layer 21. In addition, when the basis weight of the first layer 21 is denoted as A1 (g/cm²), and the basis weight of the second layer 22 is denoted as A2 (g/cm²), A2 < A1 is satisfied. The characteristics of absorbing a liquid, for example, the ink 100 of the liquid-absorbing body 1 can be made excellent. Since the ink 100 is promptly dispersed far enough on the base material layer 2, especially on the first layer 21 constituting the base material layer 2 in the surface direction, the ink 100 is absorbed and held throughout the absorbing layer 3. As a result, the capacity of the liquid-absorbing body 1 to absorb the ink 100 can be increased.

Incidentally, an intermediate layer may be formed between the first layer 21 and the second layer 22. Examples of the intermediate layer include a fixing layer fixing the first layer 21 and the second layer 22, and a gap-forming layer forming a gap between the first layer 21 and the second layer 22.

In addition, the liquid-absorbing device 10 includes: the liquid-absorbing body 1; and the container 6 accommodating the liquid-absorbing body 1 and having the opening 60 which is a liquid supply section through which the ink 100 as the liquid is supplied. Consequently, the liquid-absorbing body 1 excellent in characteristics of absorbing a liquid, for example, the ink 100 can be stably disposed in a desired position, for example, in a printing apparatus. The liquid-absorbing device 10 described above can absorb and hold a sufficient amount of a liquid and thus has an advantage in recovery of a waste liquid such as waste ink.

In addition, the configuration of the liquid supply section is appropriately determined according to the type, the shape, and the like of the container 6, and when the container 6 is a bottle, the mouth portion of the bottle serves as the liquid supply section, for example.

Incidentally, although the container 6 is composed of a hard tray in the present embodiment, the present disclosure is not limited thereto, and the container 6 may be a hard or soft bottle, a casing, or a soft bag.

Furthermore, when the density of the first layer 21 is denoted as B1 (g/cm³), and the density of the second layer 22 is denoted as B2 (g/cm³), B2 < B1 is preferably satisfied. The ink 100 can be more promptly dispersed further on the base material layer 2 in the surface direction thereby. Accordingly, the characteristics of absorbing the ink 100 of the liquid-absorbing body 1 as a whole can be made further excellent.

Furthermore, when the thickness of the first layer 21 is denoted as T1 (mm), and the thickness of the second layer 22 is denoted as T2 (mm), T1/T2 is 1.2 or more and 5 or less. The ink 100 can be more promptly dispersed further on the base material layer 2 in the surface direction thereby. Accordingly, the characteristics of absorbing the ink 100 of the liquid-absorbing body 1 as a whole can be made further excellent.

Furthermore, when the liquid diffusion rate in the surface direction of the first layer 21 is denoted as C1 (mm/s), and the liquid diffusion rate in the surface direction of the second layer 22 is denoted as C2 (mm/s), C1 < C2 is satisfied. The ink 100 can be more promptly dispersed further on the base material layer 2 in the surface direction thereby. Accordingly, the characteristics of absorbing the ink 100 of the liquid-absorbing body 1 as a whole can be made further excellent.

In addition, the base material layer 2 is stacked on each of the upper surface 31 side, which is one surface side of the absorbing layer 3, and the lower surface side 32, which is the other surface side of the absorbing layer 3. Consequently, the liquid, that is, the ink 100 can be absorbed by both surface sides of the liquid-absorbing body 1, providing excellent general-purpose properties.

In other words, when the liquid-absorbing body 1 is accommodated in the container 6, the liquid-absorbing body 1 can be placed in the container 6 regardless of the front and back of the liquid-absorbing body 1, providing excellent interchangeability, handleability, and general-purpose properties.

The configuration of the base material layer 2 on the upper surface 31 side and the configuration of the base material layer 2 on the lower surface 32 side may be the same or different from each other. Examples of the latter case include a case in which the materials constituting the first layer 21 and the second layer 22 are different and a case in which at least one of A1, A2, B1, B2, T1, T2, C1, and C2 is different.

Incidentally, the present disclosure may be configured such that the base material layer 2 is provided only on one surface side of the absorbing layer 3. In this case, the other surface side of the absorbing layer 3 may have any configuration such as a base material layer composed of a first layer and a second layer that do not satisfy A2 < A1, a single layer or sheet having liquid permeability, a sheet having liquid impermeability, a plate member, a wall section, the presence of a bottom surface or the like inside the container 6, and an opening aperture.

As illustrated in FIG. 1 and FIG. 3, the liquid-absorbing body 1 has the base material layer 2 on the upper surface side 31 of the absorbing layer 3, and a sealing portion 4 sealing the base material layer 2 on the lower surface 32 side. The sealing portion 4 is also a portion in which edge portions of the first layer 21 and the second layer 22 of the base material layer 2 on both sides are joined together. In the present embodiment, the whole circumferences of the edge portions of the base material layer 2 on the upper surface 31 side and the base material layer 2 on the lower surface 32 side are joined together by the sealing portion 4 and sealed. As illustrated in FIG. 3, this sealing portion 4 has a frame shape in a plan view. Unintended leakage of the absorbed ink 100 and the water-absorbing resin 30 of the absorbing layer 3 to the outside can be prevented or suppressed by providing the sealing portion 4 described above.

Incidentally, the sealing portion 4 is not limited to the sealing portion 4 formed over the whole circumferences of the edge portions of the base material layer 2 on the both sides, and part of the whole circumference of the edge portion may be deficient. The base material layer 2 on both sides partially opens in the liquid-absorbing body 1 thereby.

The method for joining the sealing portion 4 is not particularly limited and includes fusion such as heat fusion, ultrasound fusion, and high-frequency fusion, adhesion using an adhesive, thermocompression, taping with double-faced tape, sewing, pinning, stapling, and clipping, and one thereof or a combination of two or more thereof can be used.

In the illustrated configuration, the sealing portion 4 is formed through thermocompression. The density of fibers in the sealing portion 4 can be increased thereby. Therefore, leakage of the absorbed ink 100 from the sealing portion 4 can be effectively prevented or suppressed.

Furthermore, when the base material layer 2 on at least one side includes the above-described binder, the base material layer 2 on both sides can be joined through fusion such as heat fusion. Joining strength can be easily adjusted by appropriately selecting conditions including the type, melting point, particle diameter, and amount of the binder included in the base material layer 2 on each side.

When the sealing portion 4 is formed through joining using an adhesive, the adhesive used is not particularly limited, and a water-soluble adhesive, an organic adhesive, and the like can be used. However, a water-soluble adhesive is preferable among these.

Examples of the water-soluble adhesive include proteins such as casein, a soy protein, and a synthetic protein; various types of starch such as starch and oxidized starch; polyvinyl alcohols including a polyvinyl alcohol, a cationic polyvinyl alcohol, and a modified polyvinyl alcohol such as a silyl-modified polyvinyl alcohol; cellulose derivatives such as carboxymethyl cellulose and methyl cellulose; aqueous polyurethane resins; and aqueous polyester resins.

As illustrated in FIG. 3, the width W in a plan view of the sealing portion 4 is not particularly limited but is preferably 2 mm or more and 35 mm or less and more preferably 5 mm or more and 24 mm or less, for example. When the width W of the sealing portion 4 falls within the above ranges, the edge portions of the base material layer 2 can be sealed to a necessary and sufficient extent.

The width W of the sealing portion 4 is preferably uniform over the whole circumference of the sealing portion 4 but is not limited thereto.

The liquid-absorbing body 1 described above can be produced by a production method described below, for example.

First, as illustrated in FIG. 4, unwoven fabric as the second layer 22 is provided and a defiberized product 7 from cellulose fibers is deposited on the second layer 22 to obtain a laminated body 9 in which a deposited material 8 is stacked on the second layer 22.

Thereafter, the laminated body 9 is pressurized with a pressurizing roller (not shown) or the like to compress the deposited material 8 on the second layer 22 and form the first layer 21. The base material layer 2 can be obtained from the laminated body 9 thereby. Incidentally, when a binder is included in the deposited material 8, heating may be simultaneously carried out with pressurization. Two sheets of the base material layer 2 are produced in such a method.

Thereafter, as illustrated in FIG. 5, moisture 11 is applied to a surface of the first layer 21 of one sheet of the base material layer 2 using an atomizer or the like, and, as illustrated in FIG. 6, particles of the water-absorbing resin 30 are subsequently supplied onto the first layer 21. Then, the absorbing layer 3 composed of the water-absorbing resin 30 is formed on the first layer 21 through drying, and a laminated body 12 in which the absorbing layer 3 and the base material layer 2 on one side are laminated can be obtained thereby.

Thereafter, as illustrated in FIG. 7, the laminated body 12 is placed such that the absorbing layer 3 is positioned on the upper side, the base material layer 2 on the other side is bonded onto the surface on the side (upper side) opposite to the base material layer 2 of the absorbing layer 3 such that the first layer 21 is positioned on the absorbing layer 3 side, followed by drying same. Moisture is preliminarily applied to a surface especially to the surface to be bonded of the base material layer 2 on the other (upper) side to be bonded.

Thereafter, as illustrated in FIG. 7, portions of the base material layer 2 on both sides in which the sealing portion 4 is formed, that is, the whole circumferences of the edge portions of the base material layer 2 on both sides are vertically held and pressurized using pressurizing blocks 5 to form the sealing portion 4. The liquid-absorbing body 1 can be obtained thereby.

A thermally compressed sealing portion 4 can be formed by changing the pressurizing blocks 5 to heat pressurizing blocks.

Hereinabove, the liquid-absorbing body and the liquid-absorbing device of the present disclosure are described in relation to the illustrated embodiments. However, the present disclosure is not limited thereto, and each component constituting the liquid-absorbing body and the liquid-absorbing device can be replaced with a component with any configuration capable of exhibiting the same function. In addition, an arbitrary feature may be added.

## Claims

1. A liquid-absorbing body comprising:
an absorbing layer having a water-absorbing resin and having liquid-absorbing ability; and
a base material layer stacked on at least one surface side of the absorbing layer, the base material layer having liquid permeability, wherein
the base material layer has a first layer including cellulose and a second layer positioned on a side of the first layer opposite to the absorbing layer, the second layer having a basis weight different from a basis weight of the first layer, and
A2 < A1, wherein A1 (g/cm²) is the basis weight of the first layer and A2 (g/cm²) is the basis weight of the second layer.

2. The liquid-absorbing body according to claim 1, wherein
B2 < B1, wherein B1 (g/cm³) is density of the first layer, and B2 (g/cm³) is density of the second layer.

3. The liquid-absorbing body according to claim 2, wherein
T1/T2 is 1.2 or more and 5 or less, wherein T1 (mm) is a thickness of the first layer, and T2 (mm) is a thickness of the second layer.

4. The liquid-absorbing body according to claim 3, wherein
C1 < C2, wherein C1 (mm/s) is a liquid diffusion rate in a surface direction of the first layer, and C2 (mm/s) is a liquid diffusion rate in a surface direction of the second layer.

5. The liquid-absorbing body according to claim 1, wherein
the second layer is unwoven fabric.

6. The liquid-absorbing body according to claim 4, wherein
the base material layer is stacked on each of the one surface side and another surface side of the absorbing layer.

7. The liquid-absorbing body according to claim 6, further comprising a sealing portion sealing an edge portion of the base material layer on the one surface side and an edge portion of the base material layer on the other surface side.

8. A liquid-absorbing device comprising:
the liquid-absorbing body according to claim 1; and
a container accommodating the liquid-absorbing body and having a liquid supply section through which a liquid is supplied.
